Europäisches Patentamt

European Patent Office

Office européen des brevets

(11) Numéro de publication: **0 272 185 B1**

(12) **FASCICULE DE BREVET EUROPEEN**

(45) Date de publication de fascicule du brevet:
21.08.91

(51) Int. Cl.⁵: **G05D 7/06**

(21) Numéro de dépôt: **87402873.1**

(22) Date de dépôt: **16.12.87**

(54) **Procédé pour contrôler le débit d'un gaz dans une vanne et dispositif de débit mettant en oeuvre ce procédé.**

(30) Priorité: **19.12.86 FR 8617806**

(43) Date de publication de la demande:
**22.06.88 Bulletin 88/25**

(45) Mention de la délivrance du brevet:
**21.08.91 Bulletin 91/34**

(84) Etats contractants désignés:
**AT BE CH DE ES FR GB GR IT LI LU NL SE**

(56) Documents cités:
**GB-A- 1 155 443**
**US-A- 4 192 348**

**PATENT ABSTRACTS OF JAPAN, vol. 9, no. 70 (M-367)[1793], 30 mars 1985; & JP-A-59 200 880 (TOKYO KEIKI K.K.) 14-11-1984**

**Idem**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07(FR)**

(72) Inventeur: **Bourdon, Guy**
**2, Square Vivaldi Résidence Les Epinettes**
**F-78150 Le Chesnay(FR)**
Inventeur: **Lampin, Dominique**
**31, rue Pierrelais**
**F-92330 Chatillon(FR)**
Inventeur: **Leclerc, Daniel**
**29, rue de Solférino**
**F-92100 Boulogne(FR)**

(74) Mandataire: **Vesin, Jacques et al**
**L'AIR LIQUIDE, SOCIETE ANONYME POUR L'ETUDE ET L'EXPLOITATION DES PROCE-DES GEORGES CLAUDE 75, quai d'Orsay**
**F-75321 Paris Cédex 07(FR)**

Rank Xerox (UK) Business Services

## Description

La présente invention concerne un procédé pour contrôler un débit de gaz selon le préambule de la revendication 1 et un dispositif de contrôle de débit de gaz selon le préambule de la revendication 3.

Le document EP-A-086 259 ainsi que les articles SIEMENSZEITSCHRIFT, volume 41, N° 8, août 1967, pages 692-695, Erlangen (DE); KURT EWE : "Betriebserprobung eines Segmentblendenschiebers als Messgeber und Stellglied für Durchflüsse in extrem grossen Bereichen", REGELUNGSTECHNISCHE PRAXIS, volume 19, N° 4, avril 1977, pages M17-M20, R. Oldenburg Verlag, Munich (DE) ; G. STROHRMANN : "Losungen von MSR Aufgaben" et CONTROL ENGINEERING, volume 10, N° 9, septembre 1963, pages 101-105, New York (USA) ; G. HARTER : "Gas Flow Control a fresh viewpoint" décrivent des dispositifs de contrôle de débit de gaz mettant en oeuvre deux capteurs de pression ou un capteur de pression différentielle amont-aval pour commander le déplacement d'un organe obturateur et délivrer ainsi un débit déterminé.

Le document Patent Abstracts of Japan, volume 9, N° 70 (M-367) (1793), du 30 mars 1985 (JP-A-59200880-Tokyo Keiki KK) décrit un dispositif de contrôle de débit de gaz comportant un organe obturateur déplaçable entre une position de fermeture et une position d'ouverture réglable par un moteur pas à pas commandé, en ouverture ou en fermeture, par des commutateurs manuels commandant le nombre de pas à effectuer par le moteur dans un sens ou dans l'autre.

La présente invention a pour objet de proposer un procédé et un dispositif de contrôle de débit de gaz de conception simple et de faible coût de fabrication, ne nécessitant qu'un nombre réduit d'éléments actifs et permettant d'obtenir rapidement et avec précision un débit choisi.

Pour ce faire, selon le procédé de l'invention, avant le déplacement de l'organe obturateur vers la position d'ouverture, on détecte la position de fermeture de l'organe obturateur, on remet à zéro un compteur, on calcule le nombre de pas dont on doit déplacer le moteur pour obtenir un débit déterminé, on inscrit ledit nombre de pas dans le compteur, puis on actionne le moteur, dont chaque déplacement de pas décrémente le compteur, jusqu'à ce que le contenu du compteur soit ramené à zéro.

Selon une caractéristique du dispositif de contrôle de l'invention, ce dernier comporte un moyen de détection de la position de fermeture de l'organe obturateur fournissant un signal initialisant un compteur du dispositif de commande, ce dernier comportant des moyens de calcul pour inscrire dans le compteur un nombre de pas dont doit être déplacé le moteur pour délivrer un débit déterminé.

La présente invention concerne également une installation de fourniture d'un débit de gaz contrôlé, comportant un dispositif de contrôle de débit tel que défini ci-dessus dont le passage, sélectivement obturable par l'organe obturateur, est disposé entre un circuit d'utilisation et un circuit de fourniture de gaz sous pression, comprenant typiquement, en amont dudit passage, un régulateur de pression.

L'invention sera mieux comprise à l'aide des exemples de réalisation suivants, donnés à titre non limitatif, conjointement avec les figures qui représentent :

- la figure 1 une représentation schématique d'un exemple de réalisation du procédé selon l'invention,
- la figure 2, une vue en coupe d'un générateur selon l'invention,
- la figure 3, une vue en coupe schématique partielle d'un dispositif selon l'invention,
- la figure 4, une variante de réalisation d'un détail représenté sur la figure 3,
- la figure 5, un organigramme explicitant un mode de fonctionnement du micro-processeur commandant le générateur de débit selon un exemple de réalisation de l'invention.

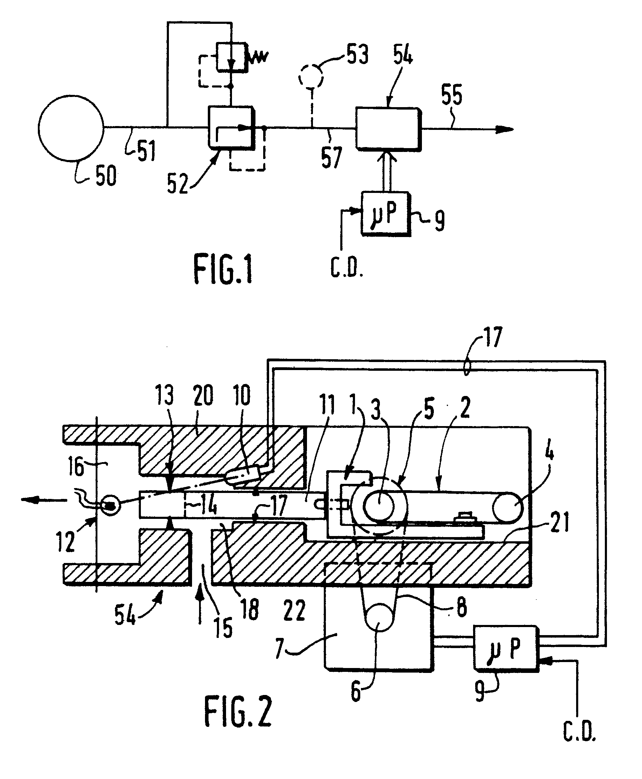

Sur la figure 1, le récipient d'alimentation en gaz 50, sous forme liquide ou gazeuse de manière connu en soi, est relié par la canalisation 51 au détendeur piloté 52 relié par la canalisation 57 à la vanne 54 commandée par le micro-processeur 9, ladite vanne 54 étant reliée à la canalisation 55 de sortie de gaz. Un capteur de pression 53 représenté en pointillé sur la figure peut lorsque cela s'avère nécessaire ou lorsque l'on désire connaître avec beaucoup d'exactitude la pression du gaz dans la canalisation sur 57 avant son arrivée dans la vanne 54 être connecté à ladite canalisation 57. En principe, ceci n'est pas nécessaire car le détendeur piloté 52 délivre un gaz dans la canalisation 57 dont le pression est constante quelque soit la pression en amont du détendeur 52 dans la canalisation 51.

Sur la figure 2 est représenté schématiquement une vue en couple de la vanne 54. Celle-ci comporte un corps 20 percé en son centre d'un alésage 18 dans lequel peut se déplacer par translation un clapet 11 réalisé sous la forme d'un pointeau mobile muni d'une fente 14. L'alésage 18, de forme cylindrique, et de section supérieure à la section circulaire pointeau 11, comporte un premier joint d'étanchéité 17 (sur la droite de la figure) placé en amont du sens normal d'écoulement du gaz arrivant par la canalisation d'arrivée 15 en contact avec l'alésage 18, et un second joint d'étanchéité 13 placé en aval de la canalisation d'arrivée 15, ce joint d'étanchéité 13 remplissant la fonction de clapet en coopération avec le pointeau mobile 11, ainsi que cela sera explicité ci-après. Le pointeau 11 est solidaire par son extrémité opposée à celle comportant la/ou les fentes 14 d'une pièce 1 en forme de U, sur la branche horizontale de ce U, cette pièce en U étant mobile en translation (horizontale sur la figure) de manière à engendrer un déplacement correspondant horizontal du pointeau 11. Le déplacement de cette pièce et du pointeau est réalisé à l'aide d'une courroie crantée 2, du moteur 7 entrainant en rotation la roue dentée 6 qui entraine par la courroie 8 la roue dentée 5 dont la rotation entraine via 3, la courroie 2.

Dans la canalisation 16 de sortie du gaz de la vanne, constitué par un alésage coaxial à l'alésage 18 dans le corps 20 de ladite vanne, est disposée une source lumineuse telle qu'une photodiode. Cette photodiode est donc placée en aval du clapet 13 par rapport au sens d'écoulement normal du gaz à travers la vanne.

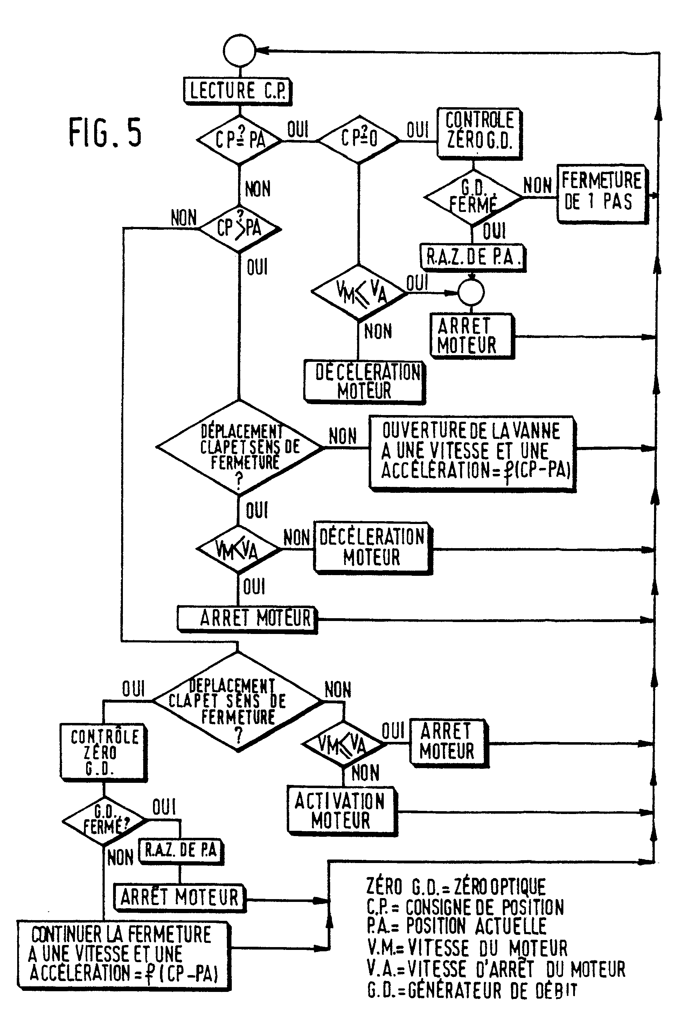

En amont du clapet 13, est disposé un photo-récepteur 10, solidaire du corps 20 de la vanne, mais dont la partie photo sensible débouche dans l'alésage 18, de telle sorte que lorsque le fond de la fente 14 est situé en amont du plan délimité par le joint circulaire 13 formant clapet, les rayons lumineux émis par la photo d'iode 12 sont détectés par ledit photo-détecteur, tandis que lorsque le fond A de la fente 14 se trouve dans le plan du joint 13 ou en aval de celui-ci par rapport au sens d'écoulement du gaz, les rayons lumineux issus de la photo d'iode 12 ne peuvent parvenir audit photo-détecteur 10. La disposition de ces éléments photos-émetteurs et photos-détecteurs doit être telle que lorsque le photo-détecteur reçoit un signal lumineux, le gaz peut s'écouler de la canalisation d'arrivée 15 vers la canalisation de sortie 16, tandis que lorsque le photo-détecteur 10 ne reçoit aucun signal lumineux, aucun courant gazeux ne peut s'écouler de la canalisation 15 vers la canalisation 16. Le photo-détecteur 10 est relié électriquement par les lignes de connexion 17 au micro-processeur 9 qui commande par les connexions électriques 18 l'avance du moteur pas à pas dans le sens voulu et selon le nombre de pas voulu, tel que cela sera explicité dans l'exemple de réalisation de la figure 5.

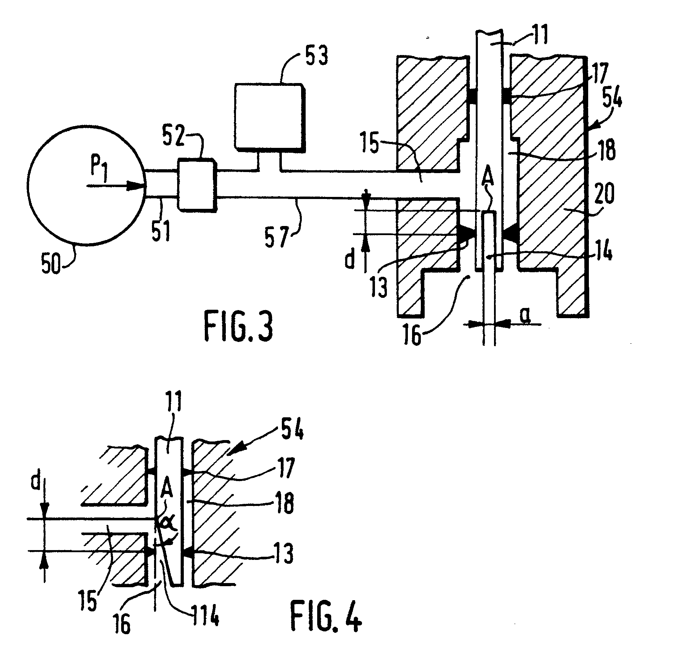

La figure 3 représente une vue partielle en coupe de l'extrémité inférieure de la vanne 54, dans un plan perpendiculaire au plan de représentation de la figure 2, passant par l'axe du pointeau 11. Sur cette figure, sur laquelle les mêmes éléments que sur les figures précédentes portent les mêmes références, on distingue clairement la fente 14 du pointeau 11, fente dont la section est rectangulaire, la distance d entre le fond A de cette fente 14 et le plan du joint formant clapet 13 déterminant en fonction de la largeur a de la fente 14 le débit de gaz de la canalisation 15 vers la canalisation 16.

La figure 4 représente une variante schématique de réalisation de la figure 3, dans laquelle on a substitué au pointeau fendu de la figure 3 un pointeau biseauté comportant une face plane incliné d'un angle alpha par rapport à l'axe du pointeau 11. La distance d entre le point A représentant l'intersection de la phase biseautée et de l'enveloppe cylindrique du pointeau 11 et le plan du joint 13, ainsi que la valeur de l'angle alpha, permettent de déterminer le débit de gaz de la canalisation 15 dans la canalisation 16. Le fonctionnement et le dispositif décrits ci-dessus est le suivant. A partir d'une consigne de débit CD qui lui est délivré, le micro-processeur calcule le nombre de pas dont le moteur doit tourner, en fonction de la géométrie de l'alésage 18 de la fente 14 du pointeau ainsi que du type d'écoulement gazeux utilisé. Généralement, cet écoulement gazeux sera un écoulement sonique et l'on sait que dans ce type d'écoulement, le débit est Q de gaz à travers une vanne est égal à :

$$Q = K \times p_{am} \times S^2,$$

K étant un coefficient fonction de la température et de la masse volumique du gaz considéré comme constant dans un but de simplification, $p_{am}$ étant la pression en amont de la vanne, S représentant la section de passage du gaz dans la vanne. Le détendeur piloté étant réglé sur une valeur de pression de détente déterminée, cette information est communiquée au micro-processeur soit directement à chaque instants, soit inscrite à l'intérieur d'une mémoire de stockage. A partir de ces différentes informations, le micro-processeur calcule le nombre de pas dont le moteur doit tourner. Il assure la commande du moteur et compte le nombre de pas pour connaître la position du pointeau mobile. Lorsque le nombre de pas a été réalisé, il arrête le moteur.

La fermeture de la vanne est détectée par l'ensemble photo-émetteur 12, photo-détecteur 10. Quand la vanne est ouverte, c'est-à-dire lorsque le fond A de la fente 14 se trouve en amont du plan du joint 13, l'énergie lumineuse émise par le photo-émetteur 12 est reçu par le photo-détecteur 10 qui délivre un signal correspondant au micro-processeur. (Par exemple "1" logique).

Quand la vanne se ferme, la lumière ne passe plus, l'élément photo-détecteur 10 n'est plus activé et un signal correspondant est envoyé via à la ligne 17 au micro-processeur 9 (par exemple "0" logique).

Ainsi qu'on le verra ci-après, le signal délivré par l'élément photo sensible est exploité par le micro-processeur qui peut ainsi vérifier si le zéro réel de débit concorde bien avec le zéro qu'il obtient par comptage de ses pas. Si les deux zéros ne concordent pas, le micro-processeur remet à zéro son compteur au moment où le dispositif optique détecte un passage à zéro.

Ce fonctionnement va être explicité plus en détail à l'aide de la figure 5 qui représente un exemple de réalisation du procédé selon l'invention.

La figure 5 représente l'organigramme de la commande du générateur de débit.

Le principe de fonctionnement est le suivant : lorsque le microprocesseur lit une consigne de position du moteur (C.P), il la compare à la position actuelle (PA) du moteur.

- si CP = PA, cela veut dire que le moteur doit s'arrêter, ou rester arrêté.
- si CP > PA, cela veut dire qu'il faut faire tourner le moteur dans le sens de l'ouverture du générateur de débit.
- si CP < PA, cela veut dire qu'il faut faire tourner le moteur dans le sens de la fermeture du générateur de débit.

A chaque fois qu'une demande d'arrêt ou d'inversion du sens de rotor (nécessitant d'abord un arrêt) est constatée, le microprocesseur compare la vitesse du moteur (VM) à la vitesse d'arrêt (VA), vitesse à laquelle le moteur peut s'arrêter brusquement sans perdre de pas.

- si VM < VA, le moteur est arrêté.
- si VM > VA, le moteur est décéléré.

L'accélération et la vitesse du moteur sont fonction de l'écart CP de façon à assurer le temps le plus court possible pour atteindre la consigne de position tout en minimisant le temps d'arrêt du moteur.

Lorsque la consigne de position est nulle (générateur de débit fermé) ou lorsque le moteur est en train de fermer le générateur de débit, le microprocesseur interroge le détecteur de zéro pour savoir si le générateur de débit est effectivement fermé ou non. Si le détecteur de zéro indique que le générateur de débit est fermé alors que PA n'est pas nul cela veut dire qu'il y a eu perte de pas. Dans ce cas, le microprocesseur remet PA à 0.

**Revendications**

1. Procédé pour contrôler un débit de gaz dans un dispositif de contrôle (54) comportant un organe obturateur (11) déplaçable, dans un passage de gaz (18), entre une position de fermeture et une position d'ouverture réglable par un moteur pas à pas (7), dans lequel on commande le moteur pour amener l'organe obturateur dans une position d'ouverture correspondant à un débit déterminé, caractérisé en ce que, avant le déplacement de l'organe obturateur vers la position d'ouverture, on détecte la position de fermeture de l'organe obturateur, on remet à zéro un compteur, on calcule le nombre de pas dont on doit déplacer le moteur pour obtenir un débit déterminé, on inscrit ledit nombre de pas dans le compteur, puis on actionne le moteur, dont chaque déplacement de pas décrémente le compteur, jusqu'à ce que le contenu du compteur soit ramené à zéro.

2. Procédé selon la revendication 1, caractérisé en ce que la position de fermeture de l'organe obturateur (11) est détectée optiquement.

3. Dispositif de contrôle de débit de gaz comprenant un organe obturateur (11) déplaçable, dans un passage de gaz (18), entre une position de fermeture et une position d'ouverture réglable par un moteur pas à pas (7) piloté par un dispositif de commande (9), caractérisé en ce qu'il comporte un moyen (10,12) de détection de la position de fermeture de l'organe obturateur (11) fournissant un signal initialisant un compteur du dispositif de commande, le dispositif de commande comportant des moyens de calcul pour inscrire dans le compteur un nombre de pas dont doit être déplacé le moteur pour délivrer un débit déterminé.

4. Dispositif selon la revendication 3, caractérisé en ce que le moyen de détection comprend un détecteur optique (10,12).

5. Dispositif selon la revendication 4, caractérisé en ce que l'organe obturateur est constitué d'un pointeau (11) comportant une découpe (14,114) et coopérant avec un joint circulaire (13) disposé dans le passage (18), le détecteur optique comprenant un émetteur (12) et un récepteur (10) agencés de part et d'autre du joint (13) sur un trajet optique passant par la découpe (14,114) en position d'ouverture du pointeau (11).

6. Dispositif selon l'une des revendications 3 à 5, caractérisé en ce que le dispositif de commande comprend un microprocesseur (9).

7. Installation de fourniture d'un débit de gaz contrôlé, caractérisé en ce qu'elle comporte un dispositif selon l'une des revendications 3 à 6, le passage (18) étant disposé entre un circuit de fourniture de gaz sous pression (50,51,57) et un circuit d'utilisation (55).

8. Installation selon la revendication 7, caractérisé en ce que le circuit de fourniture de gaz sous pression comprend, en amont du passage (18), un régulateur de pression (52).

9. Installation selon la revendication 8, caractérisée en ce que le dispositif de commande comprend un microprocesseur (9) et les moyens de calcul du microprocesseur (9) intègrent des informations relatives à la géométrie des circuits de fourniture de gaz et d'utilisation et à la pression fournie par le régulateur de pression.

## Claims

1. Method for controlling a gas flow in a control device (54) comprising a blocking element (11) which can be moved, within a gas passageway (18), between a closing position and an opening position adjustable by a step motor (7), in which method the motor is controlled to bring the blocking element into an opening position corresponding to a predetermined flow, **characterised in that,** before the blocking element moves to the opening position, the closing position of the blocking element is detected, a counting device is reset to zero, the number of steps the motor must be moved to obtain a predetermined flow is calculated, the said number of steps is recorded in the counting device, then the motor is actuated, each step movement of the motor causing a decrement of the counting device, until the content of the counting device is returned to zero.

2. Method according to claim 1, **characterised in that** the closing position of the blocking element (11) is detected optically.

3. Device for controlling a gas flow, comprising a blocking element (11) which can be moved, within a gas passageway (18), between a closing position and an opening position adjustable by a step motor (7) master controlled by a control device (9), **characterised in that** the said device for controlling a gas flow comprises a means (10, 12) for detecting the closing position of the blocking element (11), supplying a signal initialising a counting device of the control device, the control device comprising calculating means for recording in the counting device a number of steps the motor must move in order to deliver a predetermined flow.

4. Device according to claim 3, **characterised in that** the detection means comprises an optical detector (10, 12).

5. Device according to claim 4, **characterised in** that the blocking element is formed by a needle (11) having a cut away part (14, 114) and cooperating with a circular seal (13) arranged in the passageway (18), the optical detector comprising a transmitter (12) and a receiver (10) arranged on either side of the seal (13) on an optical path passing through the cut away part (14, 114) in the opening position of the needle (11).

6. Device according to one of claims 3 to 5, **characterised in that** the control device comprises a microprocessor (9).

7. Arrangement for supplying a controlled flow of gas, **characterised in that** the said arrangement comprises a device according to one of claims 3 to 6, the passageway (18) being arranged between a pressurised gas supply circuit (50, 51, 57) and a utilisation circuit (55).

8. Arrangement according to claim 7, **characterised in that** the pressurised gas supply circuit comprises, upstream of the passageway (18), a pressure regulator (52).

9. Arrangement according to claim 8, **characterised in that** the control device comprises a microprocessor (9), and the calculating means of the microprocessor (9) integrate information relating to the geometry of the gas supply and utilisation circuits and to the pressure supplied by the pressure regulator.

## Patentansprüche

1. Verfahren zum Kontrollieren eines Gasdurchsatzes in einer Kontrollvorrichtung (54), mit einem beweglichen Verschlußorgan (11), das in einem Gasdurchgang (18) zwischen einer Verschließposition und einer Öffnungsposition durch einen Schrittmotor (7) regelbar ist, bei welchem man den Motor steuert, um das Verschlußorgan in eine Öffnungsstellung entsprechend einem bestimmten Durchsatz zu bringen, dadurch gekennzeichnet, daß man vor dem Verschieben des Verschlußorgans zur Öffnungsstellung die Verschließstellung des Verschlußorgans ermittelt, man einen Zähler auf Null zurückbringt, die Anzahl Schritte berechnet, die man zum Verschieben des Motors braucht, um einen bestimmten Durchsatz zu erhalten, diese Anzahl Schritte in den Zähler einschreibt und dann den Motor betätigt, dessen jeweilige Schrittverschiebung den Zähler schrittweise zurückbringt, bis der Inhalt des Zählers auf Null zurückgebracht ist.

2. Verfahren nach Anspruch 1, dadurch gekennzeichnet, daß die Verschließstellung des Verschlußorgans (11) optisch ermittelt wird.

3. Vorrichtung zum Kontrollieren des Gasdurchsatzes mit einem beweglichen Verschlußorgan (11), das in einem Gasdurchgang (18) zwischen einer Verschließstellung und einer Öffnungsstellung durch einen Schrittmotor (7) regelbar ist, wobei der Schrittmotor (7) durch eine Steuervorrichtung (9) gesteuert ist, dadurch gekennzeichnet, daß Mittel (10, 12) vorgesehen sind zum Ermitteln der Verschließstellung des Verschlußorganes (11), die ein Signal liefern, welches einen Zähler der Steuervorrichtung initialisiert, wobei die Steuervorrichtung Berechnungsmittel aufweist, um in den Rechner eine Anzahl Schritte einzuschreiben, um die der Motor verschoben werden muß, um einen bestimmten Durchsatz zu liefern.

4. Vorrichtung nach Anspruch 3, dadurch gekennzeichnet, daß das Ermittlungsmittel einen optischen Detektor (10, 12) aufweist.

5. Vorrichtung nach Anspruch 4, dadurch gekennzeichnet, daß das Verschlußorgan eine Nadel (11) aufweist mit einer Aussparung (14, 114), die mit einer kreisförmigen Verbindungsstelle (13) zusammenwirkt, welche in dem Durchgang (18) angeordnet ist, wobei der optische Detektor einen Sender (12) und einen Empfänger (10) aufweist, die auf beiden Seiten der Verbindungsstelle (13) auf einem optischen Weg angebracht sind, welcher durch die Aussparung (14, 114) in Öffnungsstellung der Nadel (11) hindurchgeht.

6. Vorrichtung nach einem der Ansprüche 3 bis 5, dadurch gekennzeichnet, daß die Steuervorrichtung einen Mikroprozessor (9) aufweist.

7. Anlage zum Liefern eines kontrollierten Gasdurchsatzes, dadurch gekennzeichnet, daß sie eine Vorrichtung nach einem der Ansprüche 3 bis 6 aufweist, wobei der Durchgang (18) zwischen einem Lieferkreislauf für Gas unter Druck (50, 51, 57) und einem Benutzungskreislauf (55) angeordnet ist.

8. Anlage nach Anspruch 7, dadurch gekennzeichnet, daß der Lieferkreislauf für Gas unter Druck aufstromig von dem Durchgang (18) einen Druckregulator (52) aufweist.

9. Anlage nach Anspruch 8, dadurch gekennzeichnet, daß die Steuervorrichtung einen Mikroprozessor (9) aufweist und die Berechnungsmittel des Mikroprozessors (9) Informationen bezüglich der Geometrie der Gasliefer- und Benutzungskreisläufe und bezüglich dem Druck, der durch den Druckregulator geliefert wird, integrieren.

FIG.1

FIG.2

FIG.3

FIG.4

**FIG. 5**

LECTURE C.P.

CP ≟ PA — OUI → CP ≟ 0 — OUI → CONTROLE ZÉRO G.D.

NON

CP ≩ PA — NON

G.D. FERMÉ — NON → FERMETURE DE 1 PAS

OUI

R.A.Z. DE P.A.

VM < VA — OUI →

NON

DÉCÉLÉRATION MOTEUR

ARRET MOTEUR

DÉPLACEMENT CLAPET SENS DE FERMETURE ? — NON → OUVERTURE DE LA VANNE A UNE VITESSE ET UNE ACCÉLÉRATION = ʃ(CP-PA)

OUI

VM < VA — NON → DÉCÉLÉRATION MOTEUR

OUI

ARRET MOTEUR

DÉPLACEMENT CLAPET SENS DE FERMETURE ? — OUI / NON

CONTRÔLE ZÉRO G.D.

VM < VA — OUI → ARRET MOTEUR

NON

ACTIVATION MOTEUR

G.D. FERMÉ? — OUI → R.A.Z. DE P.A.

NON

ARRÊT MOTEUR

CONTINUER LA FERMETURE A UNE VITESSE ET UNE ACCÉLÉRATION = ʃ(CP-PA)

ZÉRO G.D. = ZÉRO OPTIQUE
C.P. = CONSIGNE DE POSITION
P.A. = POSITION ACTUELLE
V.M. = VITESSE DU MOTEUR
V.A. = VITESSE D'ARRÊT DU MOTEUR
G.D. = GÉNÉRATEUR DE DÉBIT

9